# EUROPÄISCHE PATENTANMELDUNG

(11) **EP 1 698 483 A1**
(43) Veröffentlichungstag der Anmeldung: **06.09.2006**
(21) Anmeldenummer: 05004400.7
(22) Anmeldetag: 01.03.2005
(51) Int. Cl.: B42D 15/00, G02B 5/126

(54) **Interaktives Verpackungsmaterial**

(71) Anmelder: Hueck Folien GmbH & Co. KG, 92712 Pirk (DE)
(72) Erfinder: Kroczynski, Udo, 92637 Weiden (DE); Reich, Peter, 92712 Pirk (DE)
(74) Vertreter: Landgraf, Elvira

(57) **Zusammenfassung**

Interaktives Verpackungsmaterial bestehend aus einem Trägersubstrat, auf das ein Authentizitätsmerkmal aufgebracht ist, dadurch gekennzeichnet, dass das Authentizitätsmerkmal ein Druckbild und eine optisch aktive Struktur in Form eines Linsensystems aufweist.

## Beschreibung

Die Erfindung betrifft ein interaktives Verpackungsmaterial, das ein Druckbild und eine optisch aktive Struktur aufweist.

Es ist bekannt, optisch aktive Strukturen, wie Beugungsstrukturen, Beugungsgitter, Diffraktionsstrukturen oder Reflexionsmuster und dergleichen durch thermische Abformung in eine insbesondere thermoplastische Träger- bzw. Lackschicht mittels Druck und Temperatur herzustellen.
Dies erfolgt üblicherweise mittels eines Prägewerkzeugs, beispielsweise eines Prägestempels, eines Prägezylinders oder einer -platte, die die entsprechende Oberflächenstrukturierung aufweist.

Ferner ist es bekannt zur Herstellung von Verpackungsmaterialien auf ein Trägersubstrat ein gewünschtes Druckbild in Form von Motiven, Symbolen, Zeichen und dergleichen in einem bekannten Beschichtungs- oder Druckverfahren, beispielsweise durch Spin-Coating, Aufstreichen, Aufdampfen, durch Drucken, (Tiefdruck, Flexodruck, Siebdruck, Offsetdruck, Digitaldruck und dergleichen) durch Aufsprühen, Sputtern oder Walzenauftragstechniken und dergleichen aufzubringen.
Insbesondere im Digitaldruck können auf einfache Weise individualisierte Druckbilder aufgebracht werden.

Aufgabe der Erfindung war es, ein Verpackungsmaterial bereitzustellen, das ein individualisiertes Druckbild und eine optisch aktive Struktur aufweist, wobei beide Sicherheitsmerkmale gemeinsam ein unverwechselbares Authentizitätsmerkmal, das einfach und kostengünstig herzustellen ist, darstellen.

Gegenstand der Erfindung ist daher ein interaktives Verpackungsmaterial, dadurch gekennzeichnet, dass es ein Druckbild und eine optisch aktive Struktur in Form eines Linsensystems aufweist.

Das entsprechende Druckbild wird in einem bekannten Druckverfahren, beispielsweise in einem Tief-, Sieb- Flexo- oder Digitaldruckverfahren vorzugsweise auf ein flexibles Trägersubstrat aufgebracht.

Zur Aufbringung eines individualisierten Druckbildes wird vorzugsweise ein Digitaldruckverfahren verwendet.

Das Druckbild kann ein Motiv, Bild, Zeichen, Buchstaben, Symbole, Ziffern und dergleichen darstellen. Dabei kann im Digitaldruckverfahren bei den aufeinander folgenden Druckbildern durch entsprechende Einstellung der Digitaldruckmaschine ein oder mehrere Teilbereiche das Motivs, Bildes, Zeichens, Symbols und dergleichen, verändert, also individualisiert, werden.
Abgestimmt auf das im Digitaldruck aufgebrachte Druckbild wird die Bildsequenz gesplittet. Das Druckbild besteht dabei aus mehreren übereinander liegenden Bildern, Motiven, Zeichen und dergleichen.
Zur Erzeugung des Druckbildes werden die Bilder in Linien aufgesplittet und als nebeneinander liegende Linien gedruckt und anschließend in einem speziellen Antialiasingverfahren (Glättung der Randzähne) die Struktur optimiert.

Die Auflösung kann dabei 10 Ipi bis 500 Ipi betragen.

Als Trägersubstrate kommen beispielsweise Trägerfolien, vorzugsweise flexible transparente Kunststofffolien, beispielsweise aus Pl, PP, MOPP, PE, PPS, PEEK, PEK, PEI, PAEK, LCP, PEN, PBT, PET, PA, PC, COC, POM, ABS, PVC in Frage.
Die Trägerfolien weisen vorzugsweise eine Dicke von 5 - 700 µm, bevorzugt 5 - 200 µm, besonders bevorzugt 5 - 50 µm auf.

Femer können als Trägersubstrat auch Metallfolien, beispielsweise Al-, Cu-, Sn-, Ni-, Fe- oder Edelstahlfolien mit einer Dicke von 5 - 200 µm, vorzugsweise 10 bis 80 µm, besonders bevorzugt 20 - 50 µm dienen. Die Folien können auch oberflächenbehandelt, beschichtet oder kaschiert beispielsweise mit Kunststoffen oder lackiert sein.

Ferner können als Trägersubstrate auch Papier oder Verbunde mit Papier, beispielsweise Verbunde mit Kunststoffen mit einem Flächengewicht von 20 - 500 g/m², vorzugsweise 40 - 200 g/m². verwendet werden.

Femer können als Trägersubstrate Gewebe oder Vliese, wie Endlosfaservliese, Stapelfaservliese und dergleichen, die gegebenenfalls vernadelt und/oder kalandriert sein können, verwendet werden. Vorzugsweise bestehen solche Gewebe oder Vliese aus Kunststoffen, wie PP, PET, PA, PPS und dergleichen, es können aber auch Gewebe oder Vliese aus natürlichen, gegebenenfalls behandelten Fasern, wie Viskosefasern eingesetzt werden. Die eingesetzten Vliese oder Gewebe weisen ein Flächengewicht von etwa 20 g/m² bis 500 g/m² auf. Gegebenenfalls müssen die Vliese oder Gewebe oberflächenbehandelt werden.

Anschließend wird das mit dem Druckbild versehene Trägersubstrat in einem Beschichtungsverfahren wie beispielsweise einem Siebdruck-, Tiefdruck- oder Flexodruckverfahren mit einem strahlungshärtbaren Lack beschichtet. Die Beschichtung kann selektiv oder vollflächig erfolgen.

Der strahlungshärtbare Lack kann beispielsweise ein strahlungshärtbares Lacksystem auf Basis eines Polyester-, eines Epoxy- oder Polyurethansystems das 2 oder mehr verschiedene, dem Fachmann geläufige Photoinitiatoren enthält, die bei unterschiedlichen Wellenlängen eine Härtung des Lacksystems in unterschiedlichem Ausmaß initiieren können. So kann beispielsweise ein Photoinitiator bei einer Wellenlänge von 200 bis 400 nm aktivierbar sein, der zweite Photoinitiator dann bei einer Wellenlänge von 370 bis 600 nm aktivierbar. Zwischen den Aktivierungswellenlängen der beiden Photoinitiatoren sollte genügend Differenz eingehalten werden, damit nicht eine zu starke Anregung des zweiten Photoinitiators erfolgt, während der erste Photoinitiator aktiviert wird. Der Bereich, in dem der zweite Photoinitiator angeregt wird, sollte im Transmissionswellenlängenbereich des verwendeten Trägersubstrats liegen. Für die Haupthärtung (Aktivierung des zweiten Photoinitiators) kann auch Elektronenstrahlung verwendet werden.

Als strahlungshärtbarer Lack kann auch ein wasserverdünnbarer Lack verwendet werden. Bevorzugt werden Lacksysteme auf Polyesterbasis.

Die Abformung der Oberflächenstruktur, erfolgt beispielsweise bei kontrollierter Temperatur mittels einer Matrize oder unter Verwendung einer Prägeform in die strahlungshärtbare Lackschicht, die durch Aktivierung des ersten Photoinitiators bis zum Gelpunkt vorgehärtet wurde und zum Zeitpunkt der Abformung sich in diesem Stadium befindet.
Wird ein wasserverdünnbarer strahlungshärtbarer Lack verwendet kann gegebenenfalls eine Vortrocknung vorgeschaltet werden, beispielsweise durch IR-Strahler.

Die Schichtdicke des aufgebrachten strahlungshärtbaren Lacks kann je nach Anforderung an das Endprodukt und Dicke des Substrats variieren und beträgt im allgemeinen zwischen 0,5 und 50 µm, vorzugsweise zwischen 2 und 10 µm, besonders bevorzugt zwischen 2 und 5 µm.

Zur Herstellung der verwendeten Prägeform wird ein Linsensystem galvanisch abgeformt.

Dabei wird in einem ersten Schritt ein Master beispielsweise durch Interferenzlithographie, Elektronenstrahllithographie oder mikromechanisch hergestellt.
Die Abformung des Masters erfolgt durch Abscheiden einer elektrisch leitfähigen Metallschicht, vorzugsweise Silber auf dem Master, der dann einem bekannten Elektroformingverfahren unterworfen wird. Anschließend erfolgt die Rekombination auf einer thermoplastischen Form, wobei durch anschließendes Abscheiden einer elektrisch leitfähigen Metallschicht, vorzugsweise Silber, Elektroforming und Schweißen des flachen Shims zu einem Zylinder das Prägewerkzeug hergestellt wird.

Um eine genaue Prägung der Oberflächenstruktur zu erhalten, ist es zweckmäßig das Prägewerkzeug auf einem temperaturkontrollierten pneumatischen und strömungsgekühlten oder beheizten Spannzylinder zu montieren.

Das mit dem Druckbild versehene Trägersubstrat wird in Kontakt mit dem temperaturgesteuerten Spannzylinder mit der darauf befindlichen Prägeform gebracht, die Prägung der Oberflächenstruktur bzw. das Linsensystems erfolgt vorzugsweise nur dann, wenn das mit dem strahlungshärtbaren Lack beschichtete Trägersubstrat sich in Kontakt mit dem Zylinder befindet.

Dabei erfolgt eine genaue Kontrolle der Verfahrensparameter, wie Druck und insbesondere Temperatur, um eine zu rasche oder zu langsame Zustandsveränderung der Lackschicht zu vermeiden.
Dabei erfolgt die Aushärtung des UV-Lacks und anschließend eine Nachhärtung.

Die Prägung erfolgt registergenau in einem sog. Insetterverfahren zu dem im Digitaldruck aufgebrachten und gesplitteten Motiven.

Dabei weist die bedruckte Materialbahn Registermarken und Steuerlinien auf, wobei über eine vorgelagerte Messeinrichtung zwischen zwei oder mehreren Registermarken der Länge nach vermessen wird und zwischen zwei oder mehreren angesteuerten Zuggruppen auf die notwendige Registerlänge eingestellt wird, und weiters die Materialbahn von einem Regelkreis über eine Registerwalze vor dem Druckwerk registergenau eingesteuert wird. Das Seitenregister wird ggf. über eine Bahnsteuerung vorgesteuert und über einen Schwenkrahmen eingesteuert wird.

Das erfindungsgemäße Verpackungsmaterial ist auf diese Weise wirtschaftlich und präzise herstellbar.

Das erfindungsgemäße Verpackungsmaterial ist vorzugsweise als Verpackungsmaterial beispielsweise in der pharmazeutischen, der Elektronik- und/oder Lebensmittelindustrie, beispielsweise in Form Blisterfolien, Faltschachteln, Abdeckungen, Folienverpackungen und dergleichen geeignet.

## Patentansprüche

1. interaktives Verpackungsmaterial bestehend aus einem Trägersubstrat, auf das ein Authentizitätsmerkmal aufgebracht ist, **dadurch gekennzeichnet, dass** das Authentizitätsmerkmal ein Druckbild und eine optisch aktive Struktur in Form eines Linsensystems aufweist.

2. interaktives Verpackungsmaterial nach Anspruch 1, **dadurch gekennzeichnet, dass** die optisch aktive Struktur eine geprägte Linsenstruktur ist.

3. Interaktives Verpackungsmaterial nach einem der Ansprüche 1 oder 2, **dadurch gekennzeichnet, dass** das Druckbild ein individualisiertes Druckbild ist.

4. Interaktives Verpackungsmaterial nach einem der Ansprüche 1 bis 3, **dadurch gekennzeichnet, dass** das Druckbild im Digitaldruck aufgebracht ist.

5. Verfahren zur Herstellung eines interaktiven Verpackungsmaterials gemäß einem der Ansprüche 1 bis 3, **dadurch gekennzeichnet, dass** auf ein Trägersubstrat ein individualisiertes Druckbild und auf dieses Druckbild eine Linsenstruktur geprägt wird.
